# EUROPEAN PATENT APPLICATION

(11) **EP 3 712 380 A1**
(43) Date of publication of application: **23.09.2020**
(21) Application number: 19163762.8
(22) Date of filing: 19.03.2019
(51) Int. Cl.: F01D 9/04, F01D 9/06, F01D 25/24, B33Y 80/00

(54) **A COMPONENT FOR AN AERO ENGINE, AN AERO ENGINE MODULE COMPRISING SUCH A COMPONENT, AND METHOD OF MANUFACTURING SAID COMPONENT BY ADDITIVE MANUFACTURING**

(71) Applicant: MTU Aero Engines AG, 80995 München (DE)
(72) Inventor: Szewczyk, Benon, 39-120 Sedziszow Malopolski (PL)

(57) **Abstract**

A component (20) for a module (5.1,5.2) of an aero engine (1), comprising an outer shell segment (21) defining a segment of a gas channel (11) radially outwards, a plurality of vane stage segments (8.1) arranged axially consecutive, each vane stage segment (8.1) comprising a plurality of vanes (22) arranged circumferentially consecutive, wherein the vanes (22) are formed integrally with the outer shell segment (21). A module for an aero engine with such components and method for manufacturing the component by additive manufacturing are also provided.

## Description

### Technical Field

The present invention relates to a component for an aero engine.

### Prior Art

Functionally, a turbomachine is structured into a compressor, a combustion chamber and a turbine. In case of an aero engine, sucked in air is compressed in the compressor. In the downstream combustion chamber, it is mixed with kerosene and is burnt. The resulting hot gas, a mixture of combustion gas and air, flows through the downstream turbine and is expanded. Therein, it drives the rotors of the turbine. Typically, the turbine and the compressor are respectively constructed of multiple stages, each stage comprising a vane stage and a blade stage. A respective vane stage comprises a plurality of vanes arranged circumferentially consecutive, and a respective blade stage comprises a plurality of circumferentially consecutive blades.

### Presentation of the Invention

It is an object of the present invention to provide an advantageous component for a module of an aero engine.

This problem is solved by the component according to claim 1. It comprises an outer shell segment, which defines a segment of the gas channel radially outwards. Further, it comprises a plurality of vane stage segments following each other axially. According to the invention, the vanes, which belong to the different vane stage segments, are formed integrally with the outer shell segment and, thus, integrally with each other. In other words, the vanes belonging to the consecutive stages in the segment of the component are connected with each other via the outer shell segment. The various elements of the resulting component, the vanes and the outer shell segment, are integral, namely one-piece with each other (they can only be separated from each other in a destructive manner).

In general, the integral component can for instance be advantageous as a lower number of individual parts has to be handled in manufacturing, which can for example prevent assembly defects. For an assembly of a complete module, which extends over the whole circumference and comprises a plurality of blade stages in addition, at least two integral components are put together. In comparison to a conventional module assembled from a plurality of separate vane stages, the assembly can be simplified. Vice versa, the integral components can also allow for a comparably fast and easy disassembly, for example for maintenance purposes.

Preferred embodiments and features are provided in this description and in the dependent claims. Therein, the individual features shall be disclosed independently of a specific claim category, the disclosure relates to apparatus and device aspects, but also to method and use aspects. In particular, it relates to the component, but also to a module assembled of at least two respective components.

"Axial", "radial" and "circumferential", as well as the corresponding directions, relate to the longitudinal axis of the module or aero engine. This axis coincides with a rotational axis, around which the blade stages rotate in operation. The radial directions extend perpendicularly to this axis, and "radially outwards" means away from the axis. The outer shell segment, which defines the gas channel radially outwards, faces radially inwards, towards the axis. Circumferentially, a respective "segment" does not extend over the whole circumference (360°), but over a section thereof. Lower limits of the circumferential extension of a segment can for instance be at least 60°, 90° or 120°, a possible upper limit is 180°.

In a preferred embodiment, the integral component is an additive manufacturing part, namely is obtained by additive manufacturing. An alternative manufacturing method would for instance be casting into a mold created by a lost-wax method. The model for creating the mold can be made of a wax or of a synthetic material, it is preferably built by additive manufacturing, which enables the complex shape.

For manufacturing such a model or preferably directly the integral component, the respective material can be applied layer by layer, for instance by weld cladding or selective laser melting (SLM). In general words, the material is applied or hardened layer per layer. Likewise, the component can be formed pursuant to a three-dimensional digital model. By a so-called slicer, the digital model can be sliced into layers, so that for each layer the area, where an application or hardening of the material is required, can be defined.

In a preferred embodiment, at least one vane is formed with a hollow space inside. Consequently, the volume between the sidewalls of the vane, which extend between its leading and its trailing edge, is not filled up completely by the material. On the one hand, a respective void structure can for instance be advantageous in terms of the overall weight, allowing for a reduction of the fuel consumption. On the other hand, a void structure is good to produce by additive manufacturing.

In a preferred embodiment, the hollow space inside the vane is a cooling channel. In use, a cooling fluid can flow through the channel, for instance air from the compressor, enabling an active cooling of the vane. Preferably, all vanes of the respective vane stage segment or vane stage are manufactured with a respective hollow space, in particular with a cooling channel.

In a preferred embodiment, the outer shell segment is formed with a flange at a circumferential side. Via the flange, the component can be mounted to another component arranged circumferentially consecutive. For this purpose, the flange protruding radially outward can for instance be adapted for inserting screws, for example a plurality of holes being drilled through the flange.

In a preferred component, each vane stage segment is provided with an inner shroud segment formed integrally with the vanes. The inner shroud segments define the gas channel segment radially inwards (at the respective vane stage). The integration of the shroud segments allows for a further reduction of individual parts that need to be handled.

In general, a respective module could be assembled of more than two components. In case of three components for instance, each of them could for example extend over 120°. However, preferably, the component extends over a half circumference, namely circumferentially over 180°. Then, the module can be assembled from exactly two components.

Preferably, the integral component is made of a titanium alloy. This can be particularly preferred in case of a turbine module, see below.

The component comprises at least two vane stage segments. Preferably, it can comprise at least three or at least four vane stage segments. Possible upper limits are for instance ten or eight vane stage segments at maximum. In case of the exemplary embodiment, six vane stage segments are integrated.

The invention also relates to a module assembled from at least two components, which are integral respectively, and from a plurality of blade stages. Together, the outer shell segments of the at least two components extend over the whole circumference (360°), they encase the blade stages. Like the outer shell segments, the vane stage segments of a respective vane stage are arranged circumferentially consecutive. In the axial direction, the vane stages and the blade stages alternate. A blade stage can for instance be assembled from a rotor disk and a plurality of separate blades. These blades can be mounted at the disc by a form fit respectively, namely be placed in a respective profile in the disk (e.g. fir tree or dovetail). Alternatively, however, a blade stage can also be a so-called blisk, namely a disk with integrally formed blades (blade integrated disc).

Preferably, the module can be assembled from exactly two components according to the invention. Those can preferably extend over a half circumference respectively, see above. Particularly preferred, the components of the module are identical in design, namely manufactured from the same digital model. Consequently, they are rotationally symmetrical with each other in the module.

The module is preferably a turbine module, in particular a low-pressure turbine module.

The invention also relates to a method for manufacturing and integral component according to the invention, and in particular a module comprising such a component. Therein, the outer shell segment and the vane stage segments are manufactured by additive manufacturing. Regarding possible manufacturing processes (e.g. SLM), reference is made to the description above.

Further, the invention relates to the use of an integral component described here or of a respective module in an aero engine, in particular in the turbine, preferably as a low pressure turbine module. In use, a compressor or hot gas flows in the gas channel and flows along the outer shell sector (in touch with an inner face thereof).

### Brief Description of the Drawings

Below, the invention is described more in detail by means of an exemplary embodiment. Therein, the individual features shall also be disclosed independently of each other.
- Figure 1: schematically shows an aero engine in an axial cross section;
- Figure 2: illustrates a component according to the invention in an oblique view;
- Figure 3: shows the component of figure 2 in an oblique viewing direction from the outside.

### Preferred Embodiment of the Invention

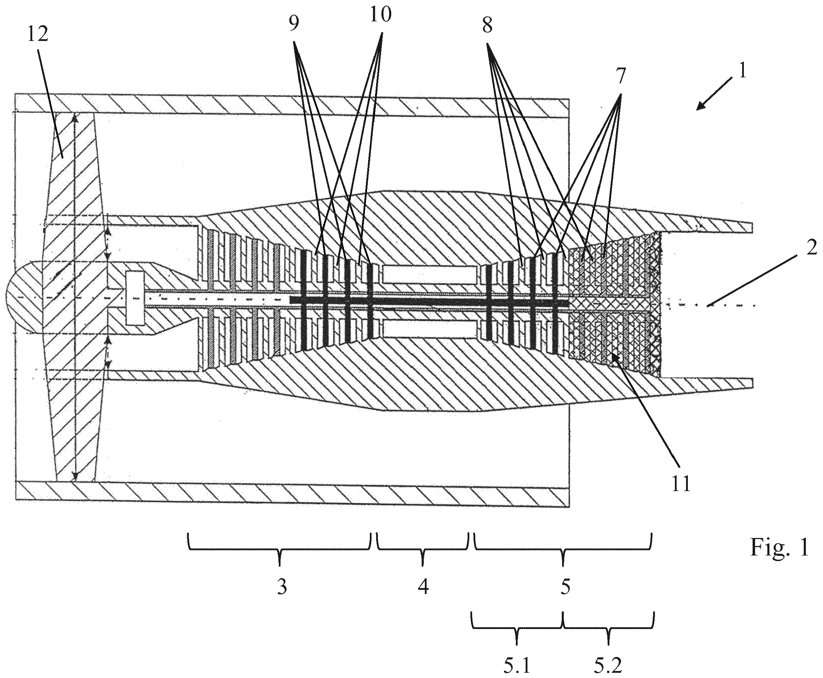

**Figure 1** shows an aero engine 1 in a section, in this case a turbo fan. A longitudinal axis 2 of the aero engine 1 lies in the sectional plane. The aero engine 1 is structured into compressor 3, combustion chamber 4 and turbine 5. In the compressor 3, sucked-in air is compressed, it is mixed with kerosene in the combustion chamber 4 and is burnt. The resulting hot gas flows through the turbine 5 and is expanded. Therein, it drives the blade stages 7 of the turbine 5. Alternating with the blade stages 7, vane stages 8 are arranged. The turbine 5 is structured into consecutive turbine modules 5.1, 5.2, namely a high pressure turbine module 5.1 and a low pressure turbine module 5.2.

The kinetic energy obtained from the hot gas flowing in the gas channel 11 is used for driving the blade stages 9 of the compressor 3, which are also arranged alternating with vane stages 10. Further, in case of the turbo fan, a part of the kinetic energy is used for driving the fan 12.

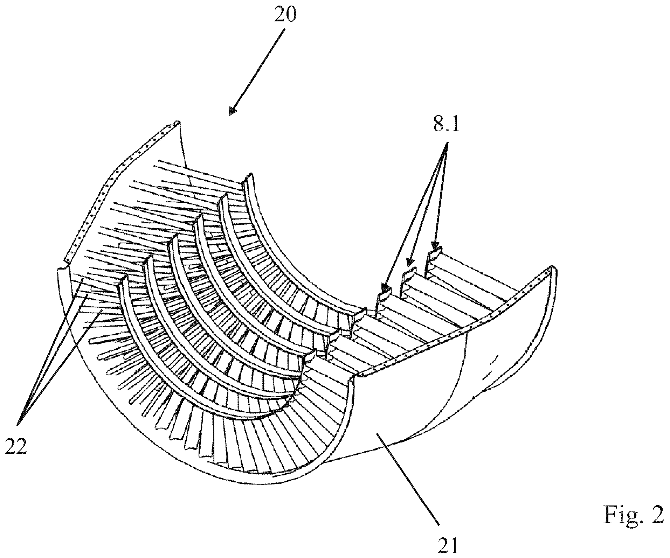

**Figure 2** shows a component 20 according to the invention. The viewing direction lies obliquely to the longitudinal axis (see figure 1, not shown in figure 2 for the sake of clarity). The component 20 comprises an outer shell segment 21, which defines a segment of the gas channel 11 radially outwards. Further, it comprises a plurality of vane stage segments 8.1, each comprising a plurality of vanes 22 arranged circumferentially consecutive. The vanes 22 are formed integrally with the outer shell segment 21. To achieve this, the component 20 is formed by additive manufacturing, namely layer per layer.

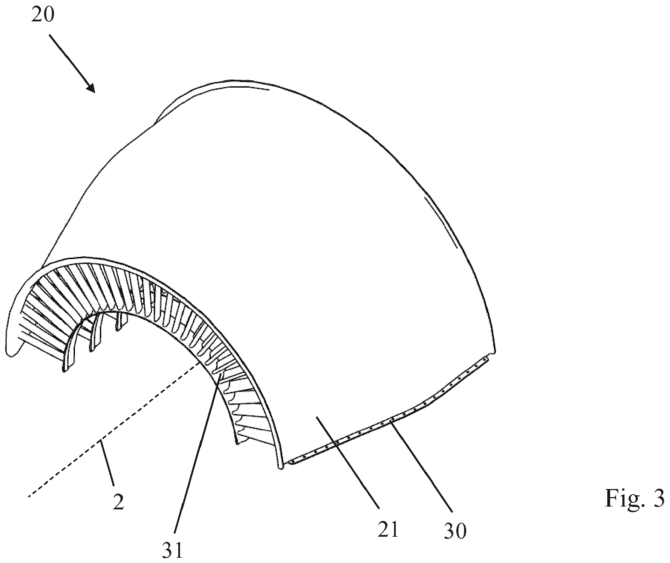

**Figure 3** shows the component 20 of figure 2 from the outside, in a viewing direction obliquely to the longitudinal axis 2. From two components 20, a module 5.1, 5.2 can be assembled, for instance the low pressure turbine module 5.2. For this purpose, the blade stages 7 are placed axially between the vane stages 8, and the components 20 are mounted together to encase the assembly. Therefore, integrally formed flanges 30 are provided at the outer shell segments 21. Apart from that, at each component 20, also the inner shroud segments 31 are manufactured integrally with the vanes 22.

**LIST OF REFERENCE NUMERALS**

| | |
|---|---|
| Aero engine | 1 |
| Longitudinal axis | 2 |
| Compressor | 3 |
| Combustion chamber | 4 |
| Turbine | 5 |
| Turbine modules | 5.1,5.2 |
| Blade stage (turbine) | 7 |
| Vane stage (turbine) | 8 |
| Vane stage segment (turbine) | 8.1 |
| Blade stage (compressor) | 9 |
| Vane stage (compressor) | 10 |
| Gas channel | 11 |
| Component | 20 |
| Outer shell segment | 21 |
| Vanes | 22 |
| Flange | 30 |
| Inner shroud segment | 31 |

## Claims

1. A component (20) for a module (5.1,5.2) of an aero engine (1), comprising an outer shell segment (21) defining a segment of a gas channel (11) radially outwards,
a plurality of vane stage segments (8.1) arranged axially consecutive,
each vane stage segment (8.1) comprising a plurality of vanes (22) arranged circumferentially consecutive,
**characterized in that**
the vanes (22) are formed integrally with the outer shell segment (21).

2. The component (20) of claim 1, wherein the component (20) is an additive manufacturing part.

3. The component (20) of claim 1 or 2, wherein at least one vane (22) of the component (20) is formed with a hollow space inside.

4. The component (20) of claim 3, wherein the hollow space inside the at least one vane (22) is a cooling channel for letting a cooling fluid flow through the at least one vane (22).

5. The component (20) of claim 4, wherein the outer shell segment (21) is formed with a flange (30) at a circumferential side, for mounting the component (20) to another component (20) arranged circumferentially consecutive.

6. The component (20) of any of the preceding claims, wherein each vane stage segment (8.1) comprises an inner shroud segment (31) formed integrally with the vanes (22).

7. The component (20) of any of the preceding claims, the outer shell segment (21) and the vane stage segments (8.1) extending over a half circumference respectively.

8. The component (20) of any of the preceding claims, being made of a titanium alloy.

9. The component (20) of any of the preceding claims, comprising not more than 10 vane stage segments (8.1).

10. A module (5.1,5.2) for an aero engine (1), comprising
at least two components (20) according to any of the preceding claims, and
a plurality of blade stages (7),
wherein the outer shell segments (21) of the at least two components (20) are assembled around the blade stages (7), encasing the blade stages (7) over a whole circumference,
the outer shell segments (21) of the at least two components (20) being arranged circumferentially consecutive,
the vane stage segments (8.1) of the at least two components (20) forming vane stages (8) together,
the vane stages (8) and the blade stages (7) alternating axially.

11. The module (5.1,5.2) of claim 10, comprising exactly two components (20).

12. The module (5.1,5.2) of claim 11, comprising two components (20) according to claim 7.

13. The module (5.1,5.2) of any of claims 10 to 12, being adapted as a turbine module (5.1,5.2), in particular as a low pressure turbine module (5.1,5.2).

14. A method for manufacturing the component (20) of claim 2, optionally also in combination with one of claims 3 to 9, wherein the outer shell segment (21) and the vane stage segments (8.1) are manufactured by additive manufacturing.

15. A use of the component (20) of any of claims 1 to 9 or of the module (5.1,5.2) of any of claims 10 to 13 in an aero engine (1).
